# EUROPEAN PATENT SPECIFICATION

(11) **EP 1 164 859 B1**
(45) Date of publication and mention of the grant of the patent: **02.07.2003**
(21) Application number: 00912827.3
(22) Date of filing: 27.03.2000
(51) Int. Cl.: A23F 3/40, A23L 1/22

(54) **FLAVOURING OR AROMATISATION OF AN INFUSION**
AROMATISIERUNG EINES AUFGUSSES
AROMATISATION D'UNE INFUSION

(30) Priority: 26.03.1999 GB 9906899
(43) Date of publication of application: 02.01.2002
(73) Proprietor: Dynamic Products Limited, Heywood, Lancashire OL10 2JF (GB)
(72) Inventor: ROBINSON, John, Deans Walk, Rochdale OL16 4PJ (GB)
(74) Representative: Every, David Aidan
(86) International application number: GB0001160
(87) International publication number: WO00057713

(56) References cited:
- EP-A- 0 084 708
- EP-A- 0 284 790
- US-A- 4 311 720
- US-A- 5 094 860
- US-A- 5 603 971
- DATABASE WPI Section Ch, Week 198645 Derwent Publications Ltd., London, GB; Class D13, AN 1986-293635 XP002142239 & HU 39 343 A (CYCLOPACK KUTATASI), 29 September 1986 (1986-09-29)

## Description

The present invention relates to a method for the flavouring or aromatisation of an infusion and more particularly to a method for producing a product that is used to make a flavoured or aromatized infusion such as, for example, a tea beverage.

It is well known to flavour or aromatise vegetable matter with natural or synthetic flavours. In the case of tea, the leaves are often flavoured or aromatised with essential oils such as bergamot or jasmine or, in some countries, spices such as mint or cardamom. In recent years there has been an increase in popularity of fruit flavoured teas such as, for example, strawberry, raspberry, lemon, blackcurrant or peach.

Flavouring or aromatisation is also used in some instances to prolong the storage life of tea without impairing its taste.

Flavouring of tea can be performed by spraying a liquid flavour in an inert edible solvent directly on to a fluidised bed of tea leaves. An example of this technique is described in EP-A-0070719. However, this method has a disadvantage in that the flavouring solution has a tendency to evaporate from the surface of the sprayed leaves during subsequent drying, storage, transportation or handling. The evaporation of the solution leads to the loss of the top notes of flavour in the resulting infusion.

In an alternative method the flavouring takes the form of solid particles that are mixed with the tea leaves on a fluidised bed (as referred to above). A disadvantage of this method is that there is a tendency for the flavour particles to separate from the leaves under the effect of gravity during storage, transportation or handling. In addition, the flavour particles tend to egress through the walls of the tea bags in which they are contained.

In both the aforementioned methods the disadvantages lead to a tea product that has a non-uniform flavour.

US-A-4880649 describes a process for flavouring an edible composition in the form of leaves, powders or particles. The composition is flavoured with an emulsion containing an active volatile flavouring substance that is non-miscible with water. The emulsion is applied by direct spraying on to the exposed surface of the composition or a carrier package for the composition (such as a tea-bag or a filter) and comprises the flavouring substance, an aqueous solution of a film-building water soluble vehicle and an emulsifying agent. The flavouring substance is initially retained on the surface of the composition by adhesion of the emulsion as a result of the bonding effect of the film-building vehicle. After the sprayed composition is dried (for example, by evaporation or absorption of the water used in preparing the emulsion) the flavouring substance is incorporated within a protective water-soluble dry layer of the film-building vehicle. In use, when the sprayed composition or carrier is immersed in water the film-building vehicle dissolves in water so as to release the flavouring substance. A disadvantage of this process is that the flavour may not be uniformly distributed throughout the composition. Whilst the method does address part of the problem of flavour evaporation, some of the flavouring substance that is exposed at the surface of the film coating will nevertheless evaporate during the drying process.

EP-A-0499858 describes a process for the aromatisation of vegetable matter such as tea using particulate micro-encapsulated flavour. Micro-encapsulated flavour powders are produced by spray-drying as a liquid on to a maltodextrin support and the particles are sieved so as to remove the smallest. Peanut oil is then mixed with the flavour particles to provide a coating which increases the particle size and the tendency of the particles to agglomerate. The coated flavour is mixed with the tea leaves and placed within tea bags. The coated, agglomerated particles are too large to egress through the walls of the tea bag material during packing and handling. When the bag is infused the peanut oil is dispersed and the flavour is released so as to pass through the bag material. This process has several disadvantages. First, the strength of a particular infusion depends on the distribution of the mix prior to bagging. The coated flavour particles will tend to separate from the tea leaves under gravitational action prior to bagging, particularly during transportation. Moreover, the peanut oil tends to pass through the bag during the infusion process and may influence the flavour or appearance of the infused beverage. In addition, since a tea manufacturer will generally produce a range of teas with different flavours the tea leaves are
generally mixed with the flavouring in relatively small batches and there is a risk of cross-contamination between batches having different flavourings.

HU-A-0039343 discloses a process for the preparation of a tea bag whereby a flavouring substance encapsulated in cyclodextrin is incorporated with binders into an aqueous solution. The solution is applied to the tea bag paper and dried so that the encapsulated particles bind to the paper.

It is an object of the present invention to obviate or mitigate the aforesaid disadvantages.

According to a first aspect of the present invention there is provided a process for the flavouring or aromatisation of product to be infused comprising the steps of producing encapsulated flavour particles, bonding the particles to a porous carrier and introducing the product into the carrier, characterised in that the dosing process is a metered printing process.

The term "particle" or "particles" is used herein to cover an encapsulated solid particle or liquid droplet of flavouring.

The terms "capsule", "encapsulant", "encapsulated" and "micro-encapsulated" are used herein to refer to any flavour oil bound within a flavour carrying matrix, regardless of whether said matrix forms a capsule in the classical sense.

The carrier may be constructed of cellulose-based material such as that used in the manufacture of tea bags. It may be constructed, for example, of cellulose or a mixture of cellulose material and a polyolefin.

The particles may be suspended or in a liquid solution for this purpose.

The flavour may be conveniently encapsulated in a polysaccharide so that the capsule has adhesive properties that allow it to bond to the carrier. In one preferred embodiment the polysaccharide is a modified starch and more preferably an n-octenyl-succinate modified starch.

Preferably the capsule is soluble in water within a predetermined temperature range. Alternatively the flavour is encapsulated by a capsule that is frangible within a pre-determined temperature range so that the flavour is released when infused in fluid within or above that particular temperature range.

The flavouring in the capsule is conveniently designed to increase in internal vapour pressure within said pre-determined temperature range so as induce rupture of said capsule. In addition, or in the alternative, the capsule may have a gum-based coating that is designed to weaken in said temperature range so as to induce rupture of said capsule.

According to a second aspect of the present invention there is provided an infusion product comprising a porous carrier containing matter to be infused and encapsulated flavour particles bonded to said carrier by using a metered printing process that controls the distribution of particles on the carrier.

In a first embodiment micro-encapsulated flavouring particles are formed by a known coascervation method and are dissolved in an aqueous solution. Each capsule contains flavouring oils and is hermetically sealed by an outer wall of entirely edible gel or gum-based material. The size of the capsule is accurately determined during manufacture so that the concentration of the flavouring oil in use is controlled.

The micro-encapsulated particles are applied to a porous cellulosic (or a combination of cellulose and polyolefin) material from which tea-bags or the like are manufactured by a known dosing process such as metered printing (e.g. rotogravure printing). After printing, the water is absorbed, dried and/or evaporates leaving the capsules bonded to the surface of the material. The capsules are designed not to rupture under external mechanical stress during processing.

The material is then cut into tea bag form, filled with tea leaves and sealed in a conventional manner.

In use, the tea-bag is infused in hot water in the usual way. As the capsules are heated by the water there is a continual weakening of the capsule wall strength and simultaneously a continual increase in the internal vapour pressure of the flavoured oil within the capsule. When the temperature of the capsule is within a predetermined temperature range the combined effect of increasing internal pressure and the weakening of the capsule walls results in catastrophic failure of the capsule material. The oil is instantaneously released, passes through the tea bag material and into the water. The capsule material is designed to dissolve in the water after rupture.

There are many advantages to using the process of the present invention in the production of flavoured products (such tea) for infusion. First, the amount of flavouring oil per tea bag can be carefully controlled as a result of the micro-encapsulation process and dosing process. The micro-encapsulation process provides careful metering of the size of oil droplet in each capsule. If an engraved metering roller (such as that used in gravure printing) is used in the printing process to apply the particles to the bag material the quantity of capsules per unit surface area of the bag material can be controlled. The control of the capsule size and their distribution over the bag enables tea-bags to be produced with flavour characteristics that are reproducible between batches. Secondly, since there is no need to subject the tea leaves to a flavour coating or mixing process not only is the tea production procedure simplified but also there is no risk of cross contamination of flavours between batches of tea. Indeed the tea can be bagged in larger batch sizes in view of the elimination of the mixing or coating stage. Thirdly, the elimination of evaporation of the flavouring oil by using hermetically sealed capsules prevents the loss of top notes of flavour. Notwithstanding this, the oil can be pre-treated by, for example, heating to remove the flavour top notes prior to encapsulation if it is desired to simulate the flavour of a conventional tea infusion.

The micro-encapsulation of the flavouring oil ensures that it is hermetically sealed so that if the tea bag is used after prolonged storage the flavour of the infusion remains fresh without the need for special flavour-retaining packaging.

In a second embodiment the flavour is encapsulated in a modified starch compound, preferably an n-octyl succinate modified starch, which may or may not be pre-gelatinised, by mixing, preferably high shear mixing, in an aqueous environment. Further ingredients, such as a weighting agent, preservative and/or citric acid may also be added. Preferred weighting agents are sucrose esters, especially sucrose acetate isobutyrate, rosin esters and polyol bezoates, preferred preservatives are sodium benzoate or potassium sorbate. Citric acid may be added in various quantities dependent upon the desired tartness of the finished product. The weighting agent, if used, is mixed with the flavouring oil prior to encapsulation by the starch, the resulting mixture being neutrally buoyant with respect to water, to reduce further any tendency the emulsion may have for separation.

The encapsulated flavour oil mixture is then applied (possibly in diluted form) to a porous cellulosic (or a combination of cellulose and polyolefin) material from which tea bags or the like are manufactured by a known dosing process such as metered printing. After printing the water is absorbed, dried and/or evaporates leaving the starch bound to the surface of the cellulosic material, with the flavour oil entrained by the starch.

In use, a tea bag made from material treated in this manner is infused in hot water. As the starch is heated it becomes detached from the tea bag material and solubilises the flavour oil into the body of the beverage, thus releasing the flavour oil into the drink.

The process of the present invention provides for a simplified procedure for producing an infusion product with improved quality.

Specific embodiments of the present invention will now be described, by way of illustration only, with reference to the following examples.

### EXAMPLE 1

A batch of Earl Grey tea was made using bergamot oil as the flavouring. A coascervation micro-encapsulation process was performed using 1 kg of bergamot oil and 5.02kg of other ingredients (principally de-ionised water) to form 6.02kg of aqueous solution with micro-capsules. A quantity of 0.3% to 5% of colloids comprising a suitable non-toxic food-safe natural gum and a specific gelatine with a suitable isoelectric point were dissolved in 40% to 90% of deionized water and conditioned with suitable reagents including emulsifiers. Following a brief period of heating to 26°C to 60°C, a quantity of 5% to 50% of bergamot oil was rapidly added and sufficiently agitated to produce droplets of an average diameter of 15µ (the majority being within a range of 5 to 25µ). The resulting mixture is adjusted to a pH level of between 4.2 and 8.0 to induce a controlled precipitation of the colloids at the boundary between the water and the bergamot oil. Following a period of stirring, the mixture was allowed to cool gradually to ambient temperature and then force-chilled to 5 to 18°C leaving a plurality of capsules filled with droplets of bergamot oil. Following a further period of stirring of 10 to 90 minutes 0.5% to 15% of a rheology modifying natural gum colloid was added and dispersed so as to form a first coating over the existing capsules. Thereafter 0.05% to 15% of rheology modifying gum was added and dispersed to form a second coating over the outside of the first coating. This gum may or may not be the same as that mentioned above and is again non-toxic and food-safe. The first and second coatings of the capsules facilitate application of the capsules to the tea bag material during a subsequent dosing process described below and dictate the strength of bond of the capsule to the tea bag material.

The tea bag material was manufactured in a conventional manner and the solution of micro-encapsulated droplets was applied thereto in measured doses by a flexographic printing process. In the particular process used here an "inking" roller turns within a reservoir of solution (which is constantly agitated). The gum coatings on the capsules enable them to adhere to the inking roller so that they are pulled out of the reservoir by the roller which then applies the solution to an Anilox micro-engraved metering roller with which it is in circumferential contact. The solution is distributed into discrete doses in the engraved patterns of the roller. The Anilox roller then transfers the doses of solution to a printing roller by which they are applied to the tea bag material. In this example, the metering of the solution was such that a wet film weight of 2g/square metre was applied. This equates to an oil distribution of 0.34g per square metre.

The printing roller ensures that the capsules are pressed into intimate contact with the tea bag material so that they are embedded into the material fibres. The gums within the capsule coatings ensure effective adhesion of the capsules to a plurality of fibres of the material.

Once printed, the majority of the water is absorbed into the tea bag material although some may evaporate during and after the printing process.

The bag material was then formed, filled and sealed using conventional apparatus and processes. Tea-bags of 65 square millimetres were formed. With each bag having two sides the total surface area of each bag was 0.00845 m² and therefore an average 0.00287g of flavouring oil per bag was applied. The tea bag was filled with approximately 2.2g of tea leaves before being sealed.

The infused tea bag gave a brew of similar strength to teas manufactured according to conventional methods but without the loss of top notes of the flavouring oil.

In a second embodiment the micro-encapsulated flavouring particles are formed by compounding a suitable polysaccharide such as a modified starch or cyclodextrin with the flavouring oil and are then suspended in an aqueous solution to form a printable solution as before.

A specific embodiment of the micro-encapsulating process is described, by way of example only, with reference to the following example.

### EXAMPLE 2

An n-octyl succinate modified starch grade, having both hydrophilic properties conferred by the hydroxyl groups along the starch backbone and hydrophobic properties conferred by the n-octyl succinate modifications, was used in attempt to form encapsulated flavour units in a aqueous environment as described below.

25g of modified starch was dissolved in 75g of water at room temperature. A flavouring oil (lemon) was added to the solution, with stirring, in a starch:oil ratio of between 6:1 and 1.5:1. Homogenisation of the resulting emulsion produces a stable emulsion, with no visible separation over prolonged standing. The emulsions resulting from homogenisation were found to be of higher viscosity than desirable for subsequent printing, but it was found that the viscosity could be reduced simply by addition of extra water.

The encapsulated flavour units are thus already in an aqueous delivery system, which is suitable for printing directly on to the tea bag material, the polysacharride backbone of the modified starch adhering to the cellulosic material of the bag. When the tea bag is infused, the encapsulated flavour units start to break down resulting in the flavour oil being released gradually into the infusion.

It will be appreciated that the present invention has application not only to tea bags but also other infusions in which a product to be infused is held by a porous carrier. For example, filter papers used in the brewing of coffee or other beverages.

## Claims

1. A process for the flavouring or aromatisation of a product to be infused comprising the steps of producing encapsulated particles of flavour, bonding the particles to a porous carrier using a dosing process to control the distribution of particles on the carrier, and introducing the product into the carrier, **characterised in that** the dosing process is a metered printing process.

2. A process according to claim 1, wherein the carrier is a cellulose-based material.

3. A process according to any preceding claim, wherein the flavouring is encapsulated by a capsule that is soluble in water within a predetermined temperature range.

4. A process according to any preceding claim, wherein the flavour is encapsulated in a polysaccharide that has adhesive properties.

5. A process according to claims 3 or 4 wherein the polysaccharide is a modified starch.

6. A process according to claim 5 wherein the polysaccharide is an n-octenyl succinate modified starch.

7. A process according to any one of claims 4 to 6, wherein the encapsulant material also performs as an emulsifier during the production of the encapsulated particles of flavour.

8. A process according to any one of claims 1 or 2, wherein the flavouring is encapsulated by a capsule that is frangible within a pre-determined temperature range.

9. A process according to claim 8, wherein the flavouring in the capsule is designed to increase in internal vapour pressure within said pre-determined temperature range so as induce rupture of said capsule.

10. A process according to claim 8 or 9, wherein the capsule has a gum-based coating that is designed to weaken in said temperature range so as to induce rupture of said capsule.

11. An infusion product comprising a porous carrier containing matter to be infused and encapsulated flavour particles bonded to said carrier by using a metered printing process that controls the distribution of particles on the carrier.

12. An infusion product according to claim 11, wherein the encapsulated flavour particles comprise an outer capsule of polysaccharide with adhesive properties.

13. An infusion product according to claim 12, wherein the polysaccharide is a modified starch.

14. An infusion product according to claim 13 wherein the modified starch is an n-octenyl succinate modified starch.

15. An infusion product according to claim 14, wherein the polysaccharide is a natural gum.

16. An infusion product according to claim 15, wherein the capsule is frangible within a predetermined temperature range.

17. An infusion product according to-claim 16, wherein the flavouring in the capsule is designed to increase in internal vapour pressure within said predetermined temperature range so as to induce rupture of said capsule.

18. An infusion product according to claim 16 or 17 wherein the capsule has a gum-based coating that is designed to weaken in said temperature range so as to induce rupture of said capsule.

## Patentansprüche

1. Verfahren für die Geschmacksverbesserung oder Aromatisierung eines Produktes, von dem eine Infusion zubereitet werden soll, umfassend die Schritte des Herstellens von gekapselten Geschmacksstoffpartikeln, Binden der Partikel an einem porösen Träger unter Anwendung eines Dosierungsprozesses zur Kontrolle der Verteilung der Partikel auf dem Träger und Einführen des Produktes in den Träger, **dadurch gekennzeichnet, dass** der Dosierungsprozess ein Druckprozess mit Dosierung ist.

2. Verfahren nach Anspruch 1, bei welchem der Träger ein Material auf Cellulosebasis ist.

3. Verfahren nach einem der vorgenannten Ansprüche, bei welchem der Geschmacksstoff mit einer Kapsel gekapselt ist, die innerhalb eines vorbestimmten Temperaturbereichs in Wasser löslich ist.

4. Verfahren nach einem der vorgenannten Ansprüche, bei welchem der Geschmacksstoff in einem Polysaccharid gekapselt ist, das über Klebeigenschaften verfügt.

5. Verfahren nach Anspruch 3 oder 4, bei welchem das Polysaccharid eine modifizierte Stärke ist.

6. Verfahren nach Anspruch 5, bei welchem das Polysaccharid eine mit n-Octenylsuccinat modifizierte Stärke ist.

7. Verfahren nach einem der Ansprüche 4 bis 6, bei welchem das kapselnde Material während der Herstellung der gekapselten Geschmacksstoffpartikel auch als ein Emulgiermittel wirkt.

8. Verfahren nach einem der Ansprüche 1 oder 2, bei welchem der Geschmacksstoff mit Hilfe einer Kapsel gekapselt ist, die innerhalb eines vorbestimmten Temperaturbereichs zerbrechlich ist.

9. Verfahren nach Anspruch 8, bei welchem der Geschmacksstoff in der Kapsel so konzipiert ist, um den inneren Dampfdruck innerhalb des vorbestimmten Temperaturbereichs zu erhöhen und so das Aufbrechen der Kapsel einzuleiten.

10. Verfahren nach Anspruch 8 oder 9, bei welchem die Kapsel einen Überzug auf Pflanzengummi-Basis hat, der so konzipiert ist, dass er in dem vorbestimmten Temperaturbereich schwächer wird, um so das Aufbrechen der Kapsel einzuleiten.

11. Infusionsprodukt, aufweisend einen porösen Träger, der eine Substanz enthält, von der eine Infusion zubereitet werden soll, sowie gekapselte Geschmackspartikel, die an dem Träger gebunden sind, indem ein Druckprozess mit Dosierung angewendet wird, der die Verteilung der Partikel auf dem Träger kontrolliert.

12. Infusionsprodukt nach Anspruch 11, bei welchem die gekapselten Geschmackspartikel eine äußere Kapsel aus Polysaccharid mit Klebeigenschaften aufweisen.

13. Infusionsprodukt nach Anspruch 12, bei welchem das Polysaccharid eine modifizierte Stärke ist.

14. Infusionsprodukt nach Anspruch 13, bei welchem die modifizierte Stärke eine mit n-Octenylsuccinat modifizierte Stärke ist.

15. Infusionsprodukt nach Anspruch 14, bei welchem das Polysaccharid ein natürlicher Pflanzengummi ist.

16. Infusionsprodukt nach Anspruch 15, bei welchem die Kapsel innerhalb eines vorbestimmten Temperaturbereichs zerbrechlich ist.

17. Infusionsprodukt nach Anspruch 16, bei welchem der Geschmacksstoff in der Kapsel so konzipiert ist, dass der innere Dampfdruck innerhalb des vorbestimmten Temperaturbereichs erhöht wird, um so das Aufbrechen der Kapsel einzuleiten.

18. Infusionsprodukt nach Anspruch 16 oder 17, bei welchem die Kapsel über einen Überzug auf Pflanzengummi-Basis verfügt, der so konzipiert ist, dass er in diesem Temperaturbereich schwächer wird, um so das Aufbrechen der Kapsel einzuleiten.

## Revendications

1. Procédé pour la sapidité ou l'aromatisation d'un produit à infuser, comprenant les étapes de production de particules encapsulées d'agent aromatisant, de fixation des particules à un support poreux en utilisant un processus de dosage pour contrôler la répartition des particules sur le support, et l'introduction du produit dans le support, **caractérisé en ce que** le procédé de dosage est un procédé d'impression dosé.

2. Procédé selon la revendication 1, dans lequel le support est un matériau à base de cellulose.

3. Procédé selon l'une quelconque des revendications précédentes, dans lequel l'agent d'aromatisation est encapsulé par une capsule qui est soluble dans l'eau au sein d'un domaine de température prédéterminé.

4. Procédé selon l'une quelconque des revendications précédentes, dans lequel l'agent d'aromatisation est encapsulé dans un polysaccharide qui a des propriétés adhésives.

5. Procédé selon les revendications 3 ou 4, dans lequel le polysaccharide est un amidon modifié.

6. Procédé selon la revendication 5, dans lequel le polysaccharide est un amidon modifié au succinate de n-octényle.

7. Procédé selon l'une quelconque des revendications 4 à 6, dans lequel le matériau encapsulant joue également le rôle d'agent émulsifiant pendant la production des particules encapsulées d'agent aromatisant.

8. Procédé selon l'une quelconque des revendications 1 ou 2, dans lequel l'agent aromatisation est encapsulé par une capsule qui est frangible au sein d'un domaine de température prédéterminé.

9. Procédé selon la revendication 8, dans lequel l'agent d'aromatisation dans la capsule est conçu pour augmenter la pression de vapeur interne au sein dudit domaine de température prédéterminé, de manière à induire la rupture de ladite capsule.

10. Procédé selon la revendication 8 ou 9, dans lequel la capsule a un revêtement à base de gomme qui est conçu pour s'affaiblir dans ledit domaine de température de manière à induire la rupture de ladite capsule.

11. Produit d'infusion comprenant un support poreux contenant la matière à infuser et des particules d'agent d'aromatisation encapsulées, liées audit support, en utilisant un procédé d'impression dosé qui contrôle la répartition des particules sur le support.

12. Produit d'infusion selon la revendication 11, dans lequel les particules d'aromatisant encapsulées comprennent une capsule externe de polysaccharide ayant des propriétés adhésives.

13. Produit d'infusion selon la revendication 12, dans lequel le polysaccharide est un amidon modifié.

14. Produit d'infusion selon la revendication 13, dans lequel l'amidon modifié est un amidon modifié au succinate de n-octényle.

15. Produit d'infusion selon la revendication 14, dans lequel le polysaccharide est une gomme naturelle.

16. Produit d'infusion selon la revendication 15, dans lequel la capsule est frangible au sein d'un domaine de température prédéterminé.

17. Produit d'infusion selon la revendication 16, dans lequel l'agent d'aromatisation dans la capsule est conçu pour augmenter la pression de vapeur interne au sein dudit domaine de température prédéterminé, de manière à induire la rupture de ladite capsule.

18. Produit d'infusion selon la revendication 16 ou 17, dans lequel la capsule a un revêtement à base de gomme qui est conçu pour s'affaiblir dans ledit domaine de température de manière à induire la rupture de ladite capsule.
